# DEMANDE DE BREVET EUROPEEN

(11) **EP 1 475 272 A1**
(43) Date de publication de la demande: **10.11.2004**
(21) Numéro de dépôt: 04291105.7
(22) Date de dépôt: 29.04.2004
(51) Int. Cl.: B60R 7/04, B60N 3/10

(54) **Dispositif de rangement cylindrique et élément d'habillage comprenant le dispositif de rangement**

(30) Priorité: 07.05.2003 FR 0305587
(71) Demandeur: Faurecia Interieur Industrie, 92000 Nanterre (FR)
(72) Inventeur: Magniez, Claude, 60570 Andeville (FR); Trillat, Sébastien, 78300 Poissy (FR)
(74) Mandataire: Prieur, Patrick

(57) **Abrégé**

Dispositif (2) de rangement notamment pour véhicule automobile comprenant :
- un réceptacle (12) présentant une cavité (14) délimitée par une enveloppe cylindrique de section sensiblement circulaire s'étendant suivant une direction d'allongement (20) sensiblement verticale, ladite enveloppe présentant une ouverture radiale (16) d'accès à la cavité,
- une paroi d'occultation (10) présentant une forme de portion de cylindre s'étendant sensiblement suivant ladite direction d'allongement,
- des moyens d'articulation (18) pour déplacer ladite paroi d'occultation (10) et ledit réceptacle (12) relativement l'un à l'autre par rotation suivant ladite direction d'allongement entre une position fermée dans laquelle ladite ouverture radiale est occultée par ladite paroi d'occultation et une position ouverte dans laquelle ladite ouverture radiale est essentiellement à l'écart de ladite paroi.

## Description

L'invention concerne un dispositif de rangement notamment pour véhicule automobile.

De tels dispositifs comprennent un réceptacle présentant une cavité destinée à recevoir divers objets à laquelle on accède par l'intermédiaire d'une ouverture. Ils sont notamment disposés dans la planche de bord ou les habillages de porte et dénommés vide-poches ou boites à gants.

On connaît de manière courante un dispositif dont le réceptacle est mobile entre une position fermée dans laquelle il s'escamote à l'intérieur d'un logement et une position ouverte dans laquelle il est à l'écart dudit logement, permettant ainsi l'accès au contenu du réceptacle par l'intermédiaire de l'ouverture. Le passage de la position fermée à la position ouverte s'effectue par déplacement (généralement par basculement) vers l'intérieur de l'habitacle, de sorte qu'en position ouverte le réceptacle vient en saillie dans l'habitacle. Par conséquent, lorsqu'il est en position ouverte, un tel dispositif risque de constituer une gêne pour l'occupant du véhicule, sauf à réduire le volume du réceptacle.

EP-A-0 721 857 décrit un dispositif remédiant à cet inconvénient. Ce dispositif comprenant un couvercle pivotant par rapport au réceptacle autour d'un axe sensiblement horizontal entre une position active dans laquelle il obture l'ouverture et une position escamotée permettant l'accès aux objets.

Toutefois, lorsque le dispositif passe de la position active à la position escamotée et inversement, les objets sont transférés du réceptacle au couvercle et inversement. Ainsi, les objets risquent de se retrouver dessus dessous, ce qui limite en pratique les possibilités d'utilisation d'un tel rangement.

Pour remédier aux inconvénients précités en relation avec les dispositifs de l'art antérieur décrits, conformément à l'invention, le dispositif de rangement comprend :
- un réceptacle présentant une cavité délimitée par une enveloppe cylindrique de section sensiblement circulaire s'étendant suivant une direction d'allongement sensiblement verticale, ladite enveloppe présentant une ouverture radiale d'accès à la cavité,
- une paroi d'occultation présentant une forme de portion de cylindre s'étendant sensiblement suivant ladite direction d'allongement,
- des moyens d'articulation pour déplacer ladite paroi d'occultation et ledit réceptacle relativement l'un à l'autre par rotation suivant ladite direction d'allongement entre une position fermée dans laquelle ladite ouverture radiale est occultée par ladite paroi d'occultation et une position ouverte dans laquelle ladite ouverture radiale est essentiellement à l'écart de ladite paroi d'occultation.

Ainsi, les objets ne risque pas de trouver mélangés ou abîmés et le rapport entre le volume de la cavité et l'encombrement du dispositif de rangement est élevé (environ 80%), tant en position fermée qu'en position ouverte et.

Afin d'améliorer le maintien des objets dans le réceptacle, en particulier en position ouverte, conformément à l'invention, le dispositif est tel que :
- le réceptacle s'étend suivant la direction d'allongement entre une extrémité inférieure et une extrémité supérieure,
- l'ouverture radiale est à l'écart de l'extrémité inférieure, de sorte que le réceptacle présente à proximité de l'extrémité inférieure un rebord s'étendant sous ladite ouverture radiale.

L'invention concerne en outre un élément d'habillage équipé d'un dispositif de rangement. Conformément à l'invention l'élément d'habillage présente les caractéristiques suivantes :
- ledit élément d'habillage comprend un support intégrant la paroi d'occultation et destiné à être fixé à la structure du véhicule,
- la paroi d'occultation définit un logement dans lequel est disposé ledit réceptacle,
- ledit réceptacle est monté pivotant suivant la direction d'allongement sur ledit support, par l'intermédiaire desdits moyens d'articulation.

Ainsi, l'intégration du dispositif de rangement à l'élément d'habillage est relativement aisée, ce qui permet de n'engendrer qu'un surcoût modéré pour équiper l'élément d'habillage du dispositif de rangement.

L'invention va apparaître encore plus clairement dans la description qui va suivre, faite en référence aux dessins annexés dans lesquels :
- la figure 1 illustre un élément d'habillage comprenant un dispositif de rangement conforme à l'invention en position ouverte,
- la figure 2 illustre en coupe médiane le dispositif de rangement de la figure 1,
- la figure 3 illustre en coupe médiane le dispositif de rangement en position fermée,
- la figure 4 illustre un deuxième dispositif de rangement conforme à l'invention en position ouverte,
- la figure 5 illustre le deuxième dispositif de rangement en position fermée,
- la figure 6 est une vue en coupe selon la ligne repérée VI-VI à la figure 4.

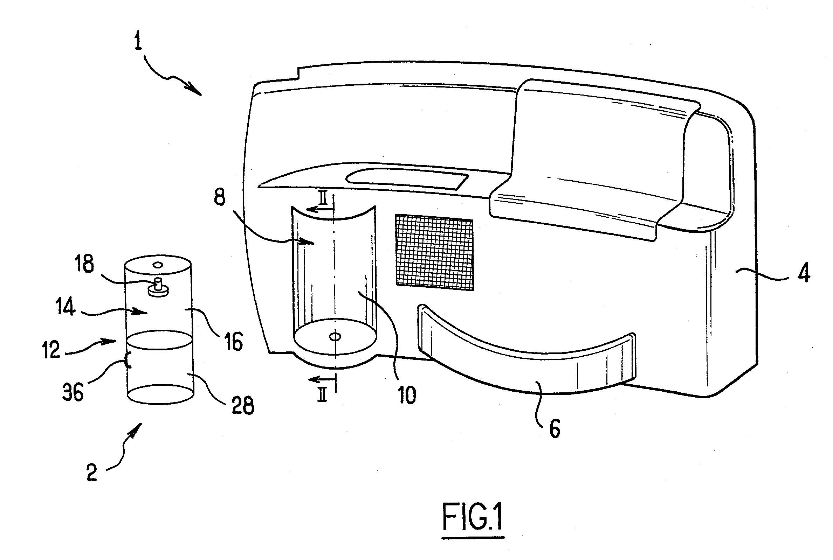

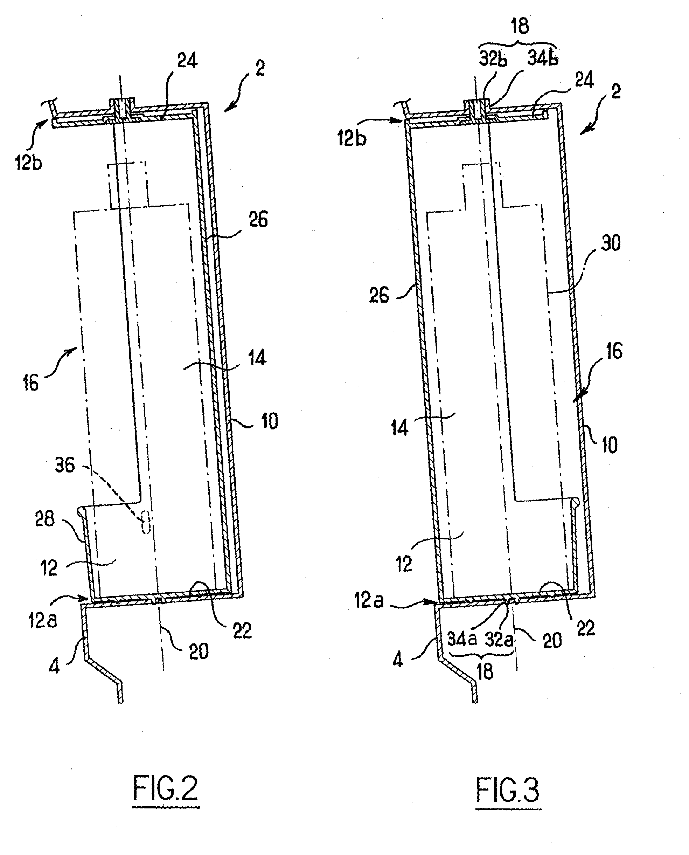

Les figures 1 à 3 illustrent un élément d'habillage intérieur de porte 1 comprenant notamment un panneau 4 destiné à être fixé sur la porte d'un véhicule et formant support pour un vide-poche de type ouvert 6 et pour un dispositif de rangement 2 conforme à l'invention de type occultable.

Ledit dispositif de rangement 2 comprend un réceptacle 12 et des moyens de liaison 18 entre le réceptacle 12 et le panneau de porte 4.

Le réceptacle 12 s'étend suivant une direction d'allongement 20 sensiblement verticale entre une extrémité inférieure 12a et une extrémité supérieure 12b. Il est sensiblement cylindrique de section circulaire et comprend une cavité 14 délimitée par une paroi de base 22 et une paroi supérieure 24 en forme de disque plein, reliées entre elles par une paroi tubulaire 26.

Ladite paroi tubulaire 26 présente une ouverture radiale 16 s'étendant sensiblement sur 180 degrés et sensiblement sur les quatre cinquièmes de hauteur du réceptacle 12 à partir de la paroi supérieure 24. Un rebord 28 destiné à retenir les objets disposés à l'intérieur de la cavité 14 s'étend sous l'ouverture radiale 16 jusqu'à l'extrémité inférieure 12a. Une bouteille 30 a été représentée ici en trait mixte, en tant que contenu de la cavité 14.

Les moyens de liaison 18 sont constitués par des arbres 32a, 32b, liés respectivement à la paroi de base 22 et à la paroi supérieure 24, venant s'insérer dans des alésages complémentaires 34a, 34b ménagés dans le panneau de porte 4. Ils maintiennent le réceptacle 12 à l'intérieur d'un logement en creux 8 ménagé dans le panneau de porte 4. Ledit logement 4 présente une forme complémentaire de celle du réceptacle 12 et est délimité par une paroi d'occultation 10 de forme hémicylindrique de section circulaire s'étendant suivant la direction d'allongement 20.

Lesdits moyens de liaison 18 guident le réceptacle 12 en rotation suivant la direction d'allongement 20 entre une position ouverte dans laquelle l'ouverture radiale 16 est à l'écart de la paroi d'occultation 10 et une position fermée dans laquelle l'ouverture radiale est disposée en regard de la paroi d'occultation 10.

Une poignée 36 facilite la préhension du réceptacle pour le déplacer d'une position vers l'autre.

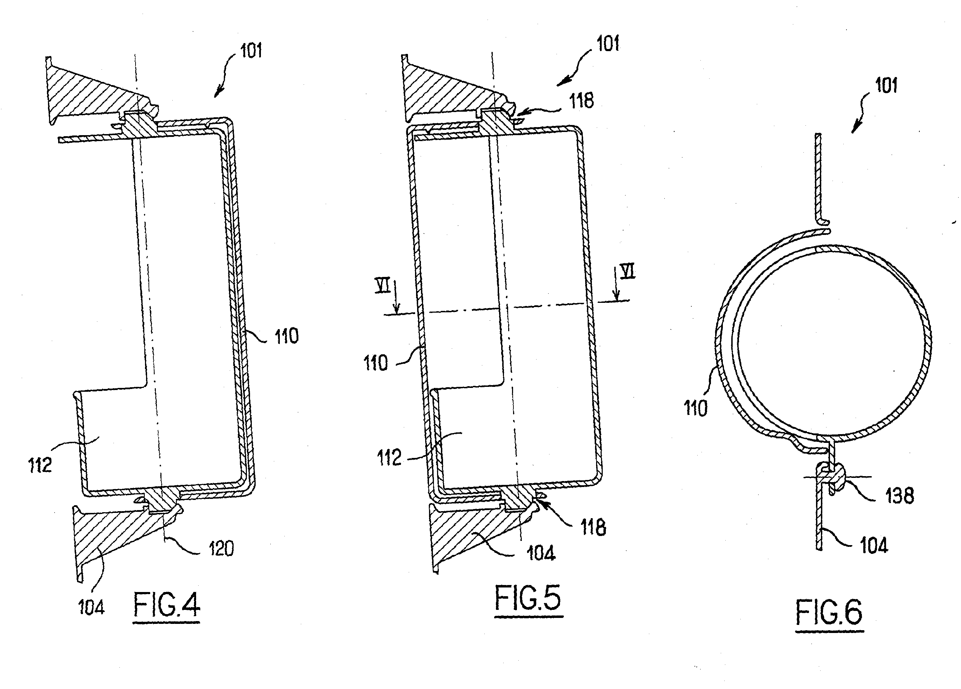

Les figures 4 à 6 illustrent un élément d'habillage 101 se distinguant essentiellement de l'élément d'habillage représenté aux figures 1 à 3 en ce le réceptacle 112 est fixé au panneau de porte 104 (par exemple par bouterollage 138) et la paroi d'occultation hémicylindrique 110 est montée mobile en rotation suivant la direction d'allongement 120 par rapport au panneau de porte 104 par l'intermédiaire des moyens d'articulation 118.

Les éléments correspondants à ceux des figures 1 à 3 ont un repère augmenté de 100.

## Revendications

1. Dispositif (2) de rangement notamment pour véhicule automobile comprenant :
- un réceptacle (12) présentant une cavité (14) délimitée par une enveloppe cylindrique de section sensiblement circulaire s'étendant suivant une direction d'allongement (20) sensiblement verticale, ladite enveloppe présentant une ouverture radiale (16) d'accès à la cavité,
- une paroi d'occultation (10) présentant une forme de portion de cylindre s'étendant sensiblement suivant ladite direction d'allongement,
- des moyens d'articulation (18) pour déplacer ladite paroi d'occultation (10) et ledit réceptacle (12) relativement l'un à l'autre par rotation suivant ladite direction d'allongement entre une position fermée dans laquelle ladite ouverture radiale est occultée par ladite paroi d'occultation et une position ouverte dans laquelle ladite ouverture radiale est essentiellement à l'écart de ladite paroi d'occultation.

2. Dispositif selon la revendication 1, **caractérisé en ce que** :
- le réceptacle (12) s'étend suivant la direction d'allongement entre une extrémité inférieure (12a) et une extrémité supérieure (12b),
- l'ouverture radiale (16) est à l'écart de l'extrémité inférieure, de sorte que le réceptacle présente à proximité de l'extrémité inférieure un rebord (28) s'étendant sous ladite ouverture radiale.

3. Elément d'habillage (1) pour véhicule automobile équipé d'un dispositif (2) selon la revendication 1 ou la revendication 2, **caractérisé en ce que** :
- ledit élément d'habillage comprend un support (4) intégrant la paroi d'occultation (10) et destiné à être fixé à la structure du véhicule,
- la paroi d'occultation définit un logement (8) dans lequel est disposé ledit réceptacle (12),
- ledit réceptacle (12) est monté pivotant suivant la direction d'allongement (20) sur ledit support (4), par l'intermédiaire desdits moyens d'articulation (18).
